# EUROPEAN PATENT APPLICATION

(11) **EP 4 415 439 A1**
(43) Date of publication of application: **14.08.2024**
(21) Application number: 24152286.1
(22) Date of filing: 17.01.2024
(51) Int. Cl.: H04W 64/00, H04W 76/12

(54) **POSITIONING IN CELLULAR COMMUNICATION NETWORKS**

(30) Priority: 08.02.2023 FI 20235122
(71) Applicant: Nokia Technologies Oy, 02610 Espoo (FI)
(72) Inventor: MICHALOPOULOS, Diomidis, Munich (DE); KUCERA, Stepan, Munich (DE); SAHIN, Taylan, Munich (DE); KESHAVAMURTHY, Prajwal, Munich (DE)
(74) Representative: Nokia EPO representatives

(57) **Abstract**

According to an example aspect of the present invention, there is provided an apparatus comprising at least one processor and at least one memory storing instructions that, when executed by the at least one processor, cause the apparatus at least to transmit, to a network node, first information for determining whether a positioning type of the apparatus is to be session-based or session-less, receive from the network node second information indicating a positioning type of the apparatus, wherein the type is one of a session-based positioning or a session-less positioning and perform positioning according to the indicated positioning type of the apparatus.

## Description

### FIELD

Various example embodiments relate in general to cellular communication networks and more specifically, to positioning in such networks.

### BACKGROUND

Positioning may be enabled in various cellular communication networks, such as in cellular communication networks operating according to 5G radio access technology, to support at least regulatory and commercial use cases. 5G radio access technology may also be referred to as new radio, NR, access technology. 3rd generation partnership project, 3GPP, develops standards for 5G/NR and some topics in the 3GPP discussions are related to positioning. According to the discussions there is a need to provide improved methods, apparatuses and computer programs related to positioning. Such improvements may be exploited in other cellular communication networks as well, like in 6G networks.

### SUMMARY

According to some aspects, there is provided the subject-matter of the independent claims. Some example embodiments are defined in the dependent claims.

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect of the present invention, there is provided an apparatus comprising at least one processor and at least one memory storing instructions that, when executed by the at least one processor, cause the apparatus at least to transmit, to a network node , first information for determining whether a positioning type of the apparatus is to be session-based or session-less, receive from the network node second information indicating a positioning type of the apparatus, wherein the type is one of a session-based positioning or a session-less positioning and perform positioning according to the indicated positioning type of the apparatus. The apparatus of the first aspect may be a target user equipment, or a control device configured to control the functioning thereof, possibly when installed therein. The network node may be, comprise or control at least one of a location management function or a user equipment.

Example embodiments of the first aspect may comprise at least one feature from the following bulleted list or any combination of the following features:
- wherein the stored instructions further cause, when executed by the at least one processor, the apparatus at least to initiate, based on determining that the type is the session-based positioning, positioning with one or more anchor user equipments;
- wherein the stored instructions further cause, when executed by the at least one processor, the apparatus at least to initiate, based on determining that the type is the session-less positioning, positioning without bidirectional communication or without exchange of acknowledged signalling;
- wherein said first information indicates at least one of a positioning application, required positioning accuracy or a priority level of a positioning accuracy;
- wherein said first information comprises a set of parameters for assisting in determination on whether the positioning type of the apparatus is to be session-based or session-less;
- wherein said first information is transmitted in a positioning request and second information is received in a positioning response;
- wherein said first information is transmitted based on receiving a request from the network node;
- wherein the transmission of said first information is triggered by the apparatus without receiving a request from the network node;
- wherein the stored instructions further cause, when executed by the at least one processor, the apparatus at least to receive, from the network node, an indication indicating that the apparatus is allowed to transmit a request for the positioning type of the apparatus and transmit, to the network node, the request at least based on receiving the indication indicating that the apparatus is allowed to transmit the request;
- wherein the stored instructions further cause, when executed by the at least one processor, the apparatus at least to receive, from the network node, a triggering condition for determining when to trigger transmission of said first information and transmit, based on determining that the triggering condition is met, said first information to the network node.

According to a second aspect of the present invention, there is provided an apparatus comprising at least one processing core, at least one memory including computer program code, the at least one memory and the computer program code being configured to, with the at least one processing core, cause the apparatus at least to receive, from a user equipment, first information for determining whether a positioning type of the user equipment is to be session-based or session-less, determine, based on said first information, whether the positioning type of the user equipment is to be session-based or session-less and transmit, to the user equipment, second information indicating the positioning type of the user equipment, wherein the type is one of a session-based positioning or a session-less positioning. The apparatus of the second aspect may be a network node, or a control device configured to control the functioning thereof, possibly when installed therein. The network node may be, comprise or control at least one of a location management function or a user equipment.

According to a third aspect of the present invention, there is provided a first method, comprising transmitting to a network node, by an apparatus, first information for determining whether a positioning type of the apparatus is to be session-based or session-less, receiving by the apparatus from the network node second information indicating a positioning type of the apparatus, wherein the type is one of a session-based positioning or a session-less positioning and performing, by the apparatus, positioning according to the indicated positioning type of the apparatus. The first method may be performed by a target user equipment, or a control device configured to control the functioning thereof, possibly when installed therein. The network node may be, comprise or control at least one of a location management function or a user equipment.

According to a fourth aspect of the present invention, there is provided a second method, receiving by an apparatus, from a user equipment, first information for determining whether a positioning type of the user equipment is to be session-based or session-less, determining by the apparatus, based on said first information, whether the positioning type of the user equipment is to be session-based or session-less and transmitting by the apparatus, to the user equipment, second information indicating the positioning type of the apparatus, wherein the type is one of a session-based positioning or a session-less positioning. The second method may be performed by a network node, or a control device configured to control the functioning thereof, possibly when installed therein. The network node may be, comprise or control at least one of a location management function or a user equipment.

According to a fifth aspect of the present invention, there is provided an apparatus, comprising means for transmitting to a network node first information for determining whether a positioning type of the apparatus is to be session-based or session-less, means for receiving from the network node second information indicating a positioning type of the apparatus, wherein the type is one of a session-based positioning or a session-less positioning and means for performing positioning according to the indicated positioning type of the apparatus. The apparatus of the fifth aspect may be a target user equipment, or a control device configured to control the functioning thereof, possibly when installed therein. The network node may be, comprise or control at least one of a location management function or a user equipment.

According to a sixth aspect of the present invention, there is provided an apparatus, comprising means for receiving by an apparatus, from a user equipment, first information for determining whether a positioning type of the user equipment is to be session-based or session-less, means for determining by the apparatus, based on said first information, whether the positioning type of the user equipment is to be session-based or session-less and means for transmitting by the apparatus, to the user equipment, second information indicating the positioning type of the apparatus, wherein the type is one of a session-based positioning or a session-less positioning. The apparatus of the sixth aspect may be a network node, or a control device configured to control the functioning thereof, possibly when installed therein. The network node may be, comprise or control at least one of a location management function or a user equipment.

According to a seventh aspect of the present invention, there is provided a non-transitory computer readable medium having stored thereon a set of computer readable instructions that, when executed by at least one processor, cause an apparatus to at least perform the first or the second method. According to an eighth aspect of the present invention, there is provided a computer program comprising instructions which, when the program is executed by an apparatus, cause the apparatus to carry out the first or the second method.

### BRIEF DESCRIPTION OF THE DRAWINGS

FIG. 1 illustrates an example of a network scenario in accordance with at least some example embodiments;
FIG. 2 illustrates a first signalling graph in accordance with at least some example embodiments;
FIG. 3 illustrates a second signalling graph in accordance with at least some example embodiments;
FIG. 4 illustrates an example apparatus capable of supporting at least some example embodiments;
FIG. 5 illustrates a flow graph of a first method in accordance with at least some example embodiments;
FIG. 6 illustrates a flow graph of a second method in accordance with at least some example embodiments.

### EXAMPLE EMBODIMENTS

Embodiments of the present disclosure provide improvements for positioning in cellular communication networks. More specifically, embodiments of the present disclosure provide improvements for positioning in such networks by making it possible for a network node to determine whether a positioning type of a target User Equipment, UE, is to be session-based or session-less. After said determination, the network node may inform the target UE about the positioning type of the target UE and the target UE may perform positioning accordingly. Hence, flexibility is provided as the network node may take into account various factors, like criticality of positioning and network resources, when determining the positioning type for the target UE. Hence, for example positioning related processes and resource consumption may be improved. In particular, Sidelink, SL, positioning may be improved.

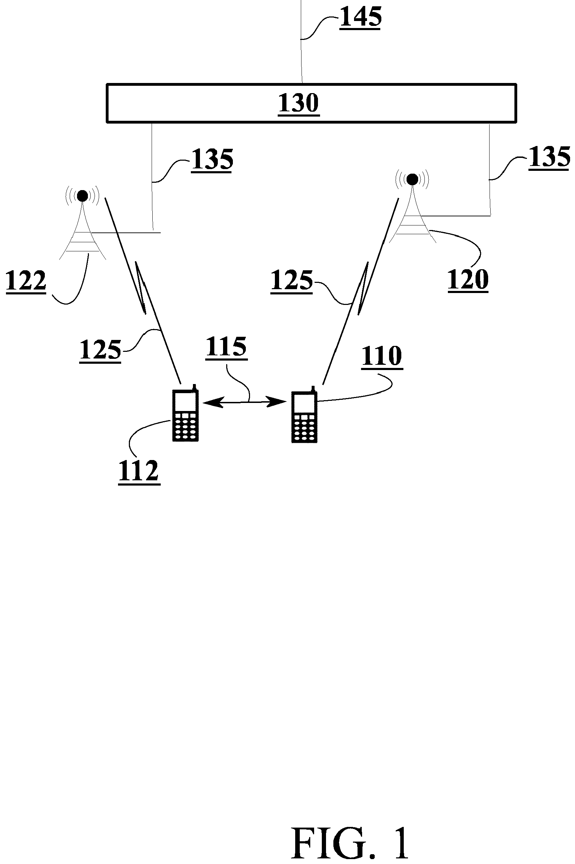

FIG. 1 illustrates an example of a network scenario in accordance with at least some example embodiments. According to the example scenario of FIG. 1, there may be a network scenario, comprising two UEs 110 and 112 configured to communicate using Sidelink, SL, communications. UE 110 may be referred to as a target UE for positioning and UE 112 may be referred to as an anchor UE for positioning, e.g., for positioning of target UE 110. The network scenario of FIG. 1 also comprises wireless network nodes 120 and 122, and core network 130.

Target UE 110 and anchor UE 112 may be connected to each other via air interface 115. Target UE 110 may be further connected to first BS 120 via air interface 125 and anchor UE 112 may be further connected second BS 122 via air interface 125. UEs 110 and 112 may comprise, for example, a smartphone, a cellular phone, a Machine-to-Machine, M2M, node, Machine-Type Communications, MTC, node, an Internet of Things, IoT, node, a Reduced Capability, RedCap, node, a car telemetry unit, a laptop computer, a tablet computer or, indeed, any kind of suitable wireless terminal.

First wireless network node 120 may be a network entity that configures some or all control information and allocates at least some resources for target UE 110. Second wireless network node 122 may be a network entity that configures some or all control information and allocates at least some resources for anchor UE 112. In some example embodiments, first wireless network node 120 may be a serving node for target UE 110 while second wireless network node 122 may be a serving node for anchor UE 112.

Air interface 115 between target UE 110 and anchor UE 112 may be configured in accordance with a first RAT which UEs 110 and 112 are configured to support. Similarly, air interface 125 between target UE 110 and wireless network node 120, and between anchor node 112 and wireless network node 122, may be configured in accordance with a second RAT which UEs 110 and 112, and wireless network nodes 120 and 122, are configured to support. Examples of cellular RATs include Long Term Evolution, LTE, New Radio, NR, which may also be known as fifth generation, 5G, radio access technology, 6G, and MulteFire. A cellular RAT may be standardized by a 3^{rd} Generation Partnership Project, 3GPP, for example. Hence, UEs 110 and 112, and wireless network nodes 120 and 122 as well, may be configured to operate according to at least one 3GPP standard.

In some example embodiments, the first and the second RATs may be the same, e.g., NR. Alternatively, the first and second RATs may be different. For instance, the first RAT may be LTE and the second RAT may be NR. In some example embodiments, target UE 110 may communicate with first wireless network node 120 using a different RAT than anchor UE 112 and second wireless network node 122 use for communication.

For example in the context of LTE, wireless network nodes 120 and 122 may be referred to as eNBs while wireless network nodes 120 and 122 may be referred to as gNBs in the context of NR. In some example embodiments, wireless network nodes 120 and 122 may be referred to as Transmission and Reception Point, TRPs, or control multiple TRPs that may be co-located or non-co-located. In any case, example embodiments of the present disclosure are not restricted to any particular wireless technology. Instead, example embodiments may be exploited in any wireless communication system, wherein positioning is used.

Wireless network nodes 120 and 122 may be connected, directly or via at least one intermediate node, with core network 130 via wired interface 135. Core network 130 may be, in turn, coupled via interface 145 with another network (not shown in FIGURE 1), via which connectivity to further networks may be obtained, for example via a worldwide interconnection network. In some example embodiments, first wireless network node 120 may be connected with second wireless network node 122 via an inter-base station interface (not shown in FIGURE 1), even though in some embodiments the inter-base station interface may be absent. Wireless network nodes 120 and 122 may be connected, directly or via at least one intermediate node, with core network 130 or with another core network.

In some example embodiments, positioning may concern the use of both, session-based and session-less positioning for estimating coordinates of a UE, like target UE 110, for example via SL positioning. Session-based positioning may refer to a positioning session with bidirectional communication. For instance, session-based positioning may refer to a positioning type, wherein a location estimate may be obtained by a time-limited twoway link enabling interactive expression and information exchange between two or more communication devices, like target UE 110 and at least one anchor UE 112, possibly in presence of a state, like information about session history. Target UE 110 may for example initiate session-based positioning with one or more anchor UEs 112, wherein session-based positioning may comprise bidirectional communication with one or more anchor UEs 112. In case of session-based positioning, target UE 110 may perform bidirectional Positioning Reference Signal, PRS, transfer with at least one anchor UE 112. In some example embodiments, session-based positioning may comprise signalling between the participants, like target UE 110 and at least one anchor UE 112, so that the session can be initialized. For instance, session-based positioning may comprise exchange of control signalling, like acknowledgement signals, between the participants.

Session-less positioning may refer to target UE 110 performing positioning without establishing any positioning session with other devices. For instance, session-less positioning may refer to a process where target UE 110 may localize itself by measuring PRS emitted by network or at least one anchor UE 112, without establishing a positioning session with such entities, meaning that the positioning of target UE 110 may be performed without any exchange of acknowledged control messages between target UE and the network or anchor UE 112. Alternatively, or in addition, session-less positioning may refer to target UE 110 performing positioning without bidirectional communication.

That is, session-less positioning may refer to a positioning type with one-way communication, wherein target UE 110 may listen and receive transmissions, but not transmit. For instance, target UE 110 may listen to reference signal transmissions, like PRS transmissions, possibly according to a configuration obtained from wireless network node 120, but not perform bidirectional communication regarding said reference signal transmissions with one or more anchor UEs 112.

The configuration may be obtained e.g. as system information, such as in System Information Block, SIB. SIB may be transmitted for example by a network element controlling one or more cells in which target UE 110 is present. For example, positioning assistance data can be included in a positioning SIB, posSIB, and the positioning assistance data may comprise the configuration. In general, for example, the configuration may be comprised in the posSIB. For example, the configuration may indicate PRS transmissions and/or resources for listening to PRS transmissions. That is, the configuration may enable the UE 110 to listen to reference signal (e.g. PRS) transmissions (e.g. broadcasts) by the anchor UEs 112. Accordingly, the configuration may enable target UE 110 to operate in session-less positioning mode.

In case of session-less positioning, anchor UE discovery procedure may be absent, as well as specific anchor UE association and SL Positioning Protocol, SLPP, session. Thus, if session-less positioning is indicated to target UE 110, target UE 110 may start listening to reference signal transmission for positioning according to the configuration. As described, target UE 110 may simply start the listening without engaging in other communication with one or more anchor UEs 112 regarding the positioning. Thus, target UE 110 may still be able to perform measurements for positioning, but with reduced resources as such session-less operation may not require as much resources as initiating a session with one or more anchor UEs 112.

In some example embodiments, a procedure may be provided for a target UE 110, to allow determining whether to use a session-based or session-less positioning, for example in case of SL positioning. Moreover, in some example embodiments, a procedure may be provided to enable revising an initial decision on the usage of session-based or session-less positioning, e.g., to switch from session-based positioning to session-less positioning, and vice versa.

Example embodiments of the present disclosure may be exploited for example in 3GPP standards, e.g., for Mode-1 UE-based SL positioning. In case of Mode-1 UE-based SL positioning, resource allocation decision may be made on the network side but the location estimation, and thus the processing of the positioning measurements, may be done at the UE side, for example at target UE 110. In such a case, example embodiments of the present disclosure may be exploited to make it possible for a network node, like a Location Management Function, LMF, to determine whether session-based or session-less positioning is to be used, as the network node may assess whether session-less positioning is sufficient or if an establishment of a SL positioning session is necessary. In some example embodiments, the LMF, as well as any other device or a network node, may decide which type of a positioning should be used (session-based or session-less) since it is the entity that manages positioning (at least in network coverage), and indicate that type to the involved UEs, like target UE 110.

Session-based positioning may be for example used to provide service and performance guarantees while resulting in overhead and delay, e.g., for the session setup and management, possible over secure and/or unicast channels. On the other hand, session-less positioning may be used to offer fast and light-weight approach to positioning, but with besteffort results only. For instance, session-less positioning may be performed without no error handling for efficient session-less broadcast.

In some example embodiments, target UE 110 may transmit, to a network node like an LMF, wireless network node 120, or any other suitable network node, like another UE, first information for determining whether a positioning type of target UE 110 is to be session-based or session-less. Transmission of said first information makes it possible for the receiving network node to assess and decide whether session-based positioning (and possibly whether it is SL or Uu positioning) or session-less positioning is to be used.

Furthermore, in some example embodiments, said first information may comprise at least one criterion for determining whether a positioning type of target UE 110 is to be session-based or session-less, like at least one hard- and/or soft-criterion. First criterion, like a hard-criterion, may indicate at least one of a positioning application, required positioning accuracy or a priority level of target UE 110, i.e., priority level of a positioning accuracy. The priority level may be for example a Quality of Service, QoS, required by target UE 110. Said first criterion may indicate a mandatory adoption of a session-based positioning or equivalently a session-less positioning without a need for considering further parameters. For instance, for a critical Vehicle-to-Everything, V2X, scenario, a network may need to setup a positioning session, like an SL positioning session, for target UE 110, because there may be critical consequences of not meeting the positioning requirements. In critical V2X scenarios, target UE 110 may also indicate to a network node, for example to an LMF, coordinates of another UE to avoid critical collisions.

Second criterion, like a soft-criterion, may indicate a set of parameters that may assist a network node, like the LMF, to decide on session-less or session-based positioning, such as SL positioning. However, in some example embodiments, said parameters may not be sufficient enough to trigger a decision on session usage on their own. Said parameters may comprise for example known locations and Discontinuous Reception, DRX, cycles of potential anchor UEs, like anchor UE 112, SL congestion related metrics (as session-less SL positioning may worsen the congestion situation in an area), etc.

Based on said first information, the network node, like the LMF or wireless network node 120, may determine whether the positioning type of target UE 110 is to be session-based or session-less. In some example embodiments, the network node may coordinate with BSs, such as gNBs, on what resources may be used for session-less positioning or transit from session-less positioning to session-based positioning, and vice versa.

In some example embodiments, target UE 110 may set up a pre-session establishment procedure with the network node, like the LMF. Setting up of the pre-session establishment procedure may be triggered by target UE 110, for example as a part of an SL location request, like an enhanced Mobile-Originated Location Request, MO-LR. Alternatively, the network node, e.g., the LMF, may request target UE 110 to provide first information needed for determining whether a positioning type of target UE 110 is to be session-based or session-less, such as for evaluating at least one hard- and/or soft-criterion that may be used for determining whether a session-less or session-based positioning is to be performed by target UE 110.

In some example embodiments, the LMF may be a network node that determines whether a positioning type of target UE 110 is to be session-based or session-less. In such a case, the pre-session establishment procedure may be performed between target UE 110 and the LMF. However, even though the LMF is used as an example in at least some example embodiments of the present disclosure, the example embodiments of the present disclosure may be applied similarly for any other suitable network node, like anchor UE 112 or wireless network node 120. That is, any other suitable network node, like anchor UE 112 or wireless network node 120, may perform said determination and tasks of the LMF.

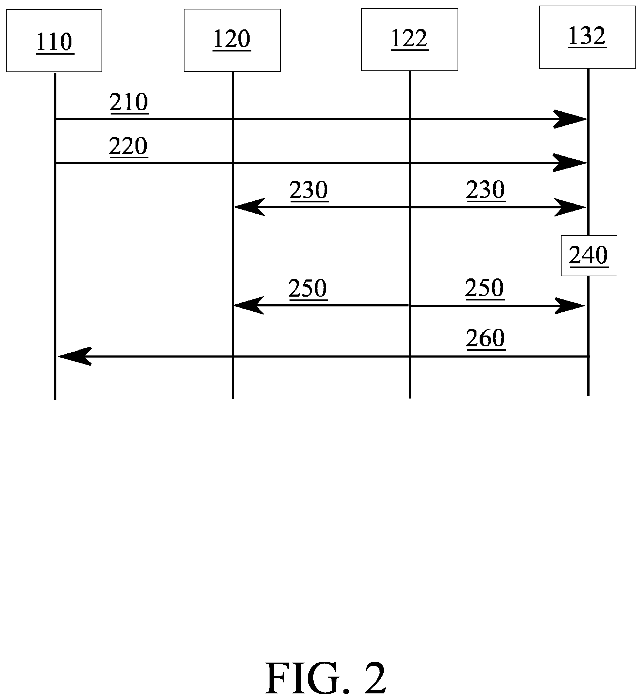

FIG. 2 illustrates a first signalling graph in accordance with at least some example embodiments. On the vertical axes are disposed, from the left to the right, target UE 110, first wireless network node 120, second wireless network node 122 and LMF 132. LMF 132 may be located in core network 130. Time advances from the top towards the bottom. It is noted that even though LMF 132 may be located in core network 130, in some examples (e.g., when core network 130 is not available), a UE (e.g. target UE 110 or some other UE) may perform operations of LMF 132. Such UE may sometimes be referred to as a server UE. In some examples embodiments, LMF 132 may be comprised in core network 130 or in one or more UEs. In the former case, for example, LMF 132 may be understood as location server and in the latter case as server UE.

At step 210, target UE 110 may transmit to LMF 132 first information for determining whether a positioning type of target UE 110 is to be session-based or session-less. In some example embodiments, when triggering an SL location request, like an MO-LR, target UE 110 may transmit to LMF 132 said first information. For instance, target UE 110 may transmit a new Information Element, IE, in an LTE Positioning Protocol, LPP, message from target UE 110 to an Access and Mobility management Function, AMF. The AMF may further transmit said first information, and possibly the IE in the LPP message, subsequently to LMF 132. In some example embodiments, the IE may be referred to as a "session-type request", and comprise the at least one hard-criterion and/or soft-criterion for LMF 132 to determine on whether session-less or session-based positioning is to be used by target UE 110. Target UE 110 may not need to necessarily understand whether a criterion is hard or soft.

At step 220, target UE 110 may transmit the at least one first criterion and/or second criterion to LMF 132. First criterion, like a hard-criterion, may indicate at least one of a positioning application, required positioning accuracy or a priority level of a positioning accuracy. The priority level may be for example a QoS required by target UE 110. In some example embodiments, whether to use session/-less positioning may be pre-mapped (as per specifications) or (pre-) configured as a function of positioning QoS/criticality. In some example embodiments, pre-mapping may mean that if the positioning application requires a QoS that has criticality level above a threshold, then target UE 110 must use session-based positioning as the session-less is not an option.

First criterion may automatically imply a mandatory adoption of a session-based positioning or equivalently a session-less positioning without a need for considering further parameters. For example, target UE 110 may indicate to LMF 132 that positioning information of target UE 110, e.g., absolute coordinates or relative coordinates to another UE or another object, is intented to be used for critical collision avoidance with another device, like another vehicle or stationary point in the V2X scenario, or another Automated Guided Vehicle, AGV, in the industrial setup). In some example embodiments, target UE 110 may indicate as a first criterion that it intends to perform non-critical asset tracking positioning.

For a critical V2X scenario, LMF 132 may need to set up a positioning session, like an SL positioning session, for target UE 110 because there may be critical consequences of not meeting the positioning requirements if the positioning session is not set up. For the non-critical asset tracking scenario, LMF 132 may use a session-less positioning, like SL positioning, to save resources but that may not be as critical as in the critical V2X scenario.

Second criterion, like a soft-criterion, may indicate a set of parameters that may assist LMF 132 to decide on session-less or session-based positioning, such as SL positioning. Said parameters may comprise for example at least one of the following or any combination thereof:
- The DRX cycles of potential anchor UEs in the area, like anchor UE 112, as these DRX cycles may be obtained via Radio Resource Control, RRC, for example via unicast information in the PC5 interface;
- An SL congestion related metric, e.g., SL Channel Busy Ratio, CBR, or Channel usage Ratio, CR, as session-less SL positioning may worsen the congestion situation in an area. For instance, the positioning CBR of the SL PRS signals that are broadcasted (and advertised over SL broadcast signals) in the area of target UE 110;
- The required minimum update rate of the estimated location information at target UE 110;
- The level of promptness of the location estimate with respect to the time target UE 110 identifies that location information is needed (e.g., a criterion referred to also as latency constraint);
- Information gathered from discovery messages: For example, what type of UEs are nearby, such as Road Side Units, RSUs, Positioning Reference Units PRUs, full capability UEs or RedCap UEs;
- Area information (e.g., zone identity), that is information related to a zone/area (e.g., related to physical geographical area, cell area, or logical area formed according to resource allocation (e.g., SL mode 2) or positioning service) target UE 110 finds itself;
- The location uncertainty of anchor UE, like anchor UE 112, as advertised via PC5 broadcast;
- The absolute locations of the anchor UEs and their identities as advertised via PC5 broadcast.

After reception of first information for determining whether a positioning type of target UE 110 is to be session-based or session-less, for example in an SL location request possibly comprising the "session-type request" IE, LMF 132 may coordinate with wireless network nodes, at step 230. LMF 132 may coordinate with wireless network nodes, like gNBs and/or TRPs, possibly comprising both, serving wireless network node 120 of target UE 110 and serving wireless network node 122 of anchor UE 112. In some example embodiments, the wireless network nodes may be indicated along with said first information, for example in location request regarding reference signal resources, such as SL PRS resources, anchor UEs may use for session-less or session-based positioning. The coordination may be performed along with, or within, NR Positioning Protocol A, NRPPa, signalling.

At step 240, LMF 132 may then determine, based on said first information, whether the positioning type of target UE 110 is to be session-based or session-less. In some example embodiments, LMF 132 may process the at least one hard- and/or soft-criterion and determine whether the type is to be session-less or session-based positioning. For example, if LMF 132 determines that the hard criterion is such that no session-less positioning is allowed, the decided session type is session-based. On the other hand, if LMF 132 determines that there is no hard criterion that requires session-based positioning and the soft criteria are flexible enough to permit session-less at this point in time, LMF 132 may indicate to target UE 110 to perform session-less positioning. At step 250, LMF 132 may coordinate resources for reference signals, like SL-PRS resources, based on the outcome of said determination, at step 240.

After that, LMF 132 may transmit, at step 260, to target UE 110 second information indicating the positioning type of target UE 110, wherein the positioning type is one of a session-based positioning or a session-less positioning. For instance, LMF 132 may respond to target UE 110 with a new IE as part of the MO-LR response. Hence, target UE 110 may receive from LMF 132, possibly based on, like responsive to, transmitting said first information, second information indicating the positioning type target UE 110. The positioning type may be one of a session-based positioning or a session-less positioning.

In some example embodiments, second information may comprise a binary indication (session-based or session-less positioning). Alternatively, or in addition, LMF 132 may indicate to target UE 110 in the same message information related to hybrid SL-Uu positioning. That is, LMF 132 may indicate whether hybrid positioning is to be used, instead of, e.g., SL positioning only (without Uu positioning) or Uu positioning only (without SL positioning), possibly along with assistance information pertaining to downlink reference signal configurations, like DL-PRS configurations.

Target UE 110 may, after receiving said second information, perform positioning according to the indicated positioning type of target UE 110. Reception of said second information may be hence considered as at least a part of the outcome of the pre-session procedure with LMF 132 and after that target UE 110 may implement the indicated positioning type, as indicated by LMF 132.

Target UE 110 may initiate, based on (e.g. in response to) determining that the positioning type is the session-based positioning, positioning with one or more anchor UEs, like anchor UE 112, with bidirectional communication. That is, if the positioning type is session-based, target UE 110 may initiate a positioning session to extract its location estimate. In some example embodiments, the session-based positioning may be either a pure SL positioning session or a hybrid SL-Uu positioning session. In the former case, target UE 110 may signal over PC5 a SL positioning discovery message and trigger said one or more anchor UEs to be used for the SL positioning session. In the latter case, i.e., hybrid positioning, target UE 110 may signal to the nearby anchor UEs (e.g., by means of a discovery message over PC5) and LMF 132, its intention to start a hybrid Uu-PC5 positioning session.

In some example embodiments, for example in mode 1 SL positioning, LMF 132 may signal a configuration configuring said one or more anchor UEs with reference signal resources, like SL PRS resources. In some example embodiments, in case the SL or hybrid positioning session breaks, target UE 110 may re-initiate the pre-session procedure with LMF 132, request re-evaluation of whether a new positioning session is established (session-based) or switch to session-less positioning. In some example embodiments, in case of tight latency requirements, target UE 110 may fall back immediately to session-less positioning to avoid interruption and re-initate the pre-session procedure requesting for new session-type. Target UE 110 may maintain session-less positioning until a session-type request is received from the network, e.g., LMF 132.

If the positioning type is session-less, target UE 110 may initiate, based on (e.g. in response to) determining that the type is the session-less positioning, positioning without bidirectional communication. For instance, target UE 110 may start listening to available reference signals to estimate its location. In some example embodiments, target UE 110 may utilize broadcasted assistance information (e.g., received during or prior to the pre-session procedure) on the configurations of such reference signals to measure them and estimate its location. For example, as discussed earlier, a SIB or posSIB may be used to indicate configuration for session-less positioning. Alternatively, target UE 110 may receive such assistance information (or configuration) about the positioning reference signals from LMF 132, e.g., as a part of the modified MO-LR response. More generally, the configuration for session-less positioning (e.g. what signals to measure and on what resources) may be comprised or indicated in the second information indicating the positioning type. For example, said configuration may be comprised or indicated in the second information if the indicated positioning type is session-less positioning. Thus, if LMF 132 determines that positioning type is to be session-less, it may also indicate the configuration for session-less operation to target UE 110. Thus, for example, if LMF 132 determines that positioning type is to be session-based, the configuration for session-less positioning may not be provided in step 260.

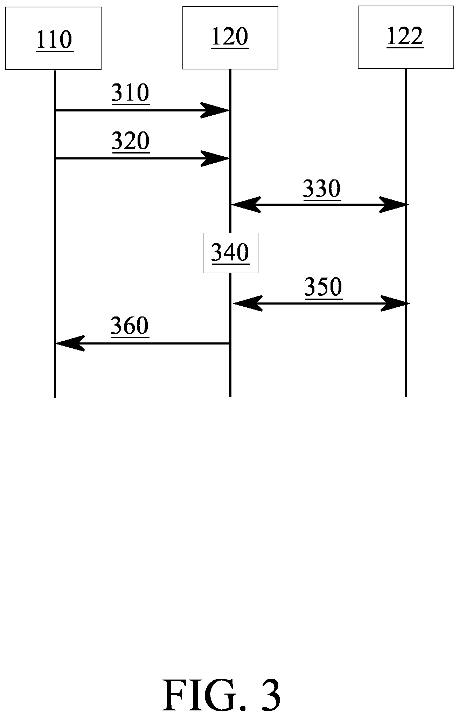

FIG. 3 illustrates a second signalling graph in accordance with at least some example embodiments. On the vertical axes are disposed, from the left to the right, target UE 110, first BS 120 and second BS 122. LMF 132 may be located in core network 130. Time advances from the top towards the bottom. In the second signalling graph of FIG. 3, the network node determining whether the positioning type of target UE 110 is to be session-based or session-less may be wireless network node 120. In case of wireless network node 120 being the network node performing said determination, the pre-session procedure may be carried out by means of RRC signalling exchange.

At step 310, target UE 110 may transmit to wireless network node 120 first information for determining whether a positioning type of target UE 110 is to be session-based or session-less. For instance, target UE 110 may transmit a new session-type request RRC IE to wireless network node 120, e.g., the serving gNB of target UE 110. At step 320, target UE 110 may transmit an indication indicating identities of wireless network nodes of a serving wireless network node of identified anchor UEs, like anchor UE 110.

At step 330, wireless network node 120 may issue signalling over an X2 interface between the identified wireless network nodes, like wireless network node 122. Wireless network node 120 may hence coordinate for example session-less resources, possibly taking into account at least one soft-criterion.

At step 340, wireless network node 120 may determine, based on said first information, whether the positioning type of target UE 110 is to be session-based or session-less. For instance, the serving gNB may determine the type of SL positioning and respond to target UE 110, possibly by means of RRC signalling. In some example embodiments, wireless network node 120 may consider said first and/or second criteria as well.

At step 350, wireless network node 120 may coordinate on what type of positioning resources, like SL-PRS positioning resources (session-less or session-based) may be supported based on said determination, at step 340. At step 360, wireless network node 120 may transmit to target UE 110 second information indicating the positioning type of target UE 110, wherein the type is one of a session-based positioning or a session-less positioning

Alternatively, instead of using the X2 interface, wireless network node 120 may indicate said first information to LMF 132 and LMF 132 may coordinate with other wireless network nodes after determining the positioning type of target UE 110. In such a case, LMF 132 may respond to wireless network node 120 and wireless network node 120 may then further respond to target UE 110.

In some example embodiments, e.g., when UEs are outside coverage, the network node determining whether the positioning type of target UE 110 is to be session-based or session-less may be another UE, like anchor UE 112, a server UE or a coordinator UE that coordinates positioning (e.g., by serving partial/full LMF functionality). In some example embodiments, the network node determining whether the positioning type of target UE 110 is to be session-based or session-less may be another RAN or core network node, e.g., gNB or a local LMF (an LMF collocated with a gNB).

In some example embodiments, a network node may transmit, to target UE 110, an indication indicating whether target UE 110 is allowed to transmit a request for the positioning type of target UE 110. For instance, for the UEs to be able to send a session-type request, and also to provide the accompanying at least one hard criterion, at least one soft-criteria, or both, the network node may indicate whether the UEs are allowed to do so. For instance, at least the following options may be available:
- Option 1: the network node may indicate to UEs beforehand whether they are allowed to send a session-type request, or whether network allows only a session-based or session-less SL positioning, without accepting any requests. Additionally, in case the session-type request is allowed, the network node may further indicate to UEs whether they may provide the associated hard criteria, soft criteria, or both;
- Option 2: the network node may indicate to UEs to provide at least one hard criterion, at least one soft-criteria, or both after receiving a session-type request from the UE.

In both options, the network node may indicate whether target UE 110 is allowed to transmit the request, i.e., whether use of session-type requests and associated criteria provision is enabled, to UEs via DL RRC broadcast/groupcast SIB message or RRC unicast reconfiguration message via wireless network nodes or via a unicast LPP message directly from LMF 132. If target UE 110_receives, from a network node, an indication indicating that it is allowed to transmit a request for the positioning type, target UE 110 may transmit, to the network node, the request at least based on receiving the indication indicating that it is allowed to transmit the request.

In some example embodiments, target UE 110 may receive, from the network node, a triggering condition for determining when to trigger transmission of said first information and transmit, responsive to determining that the triggering condition is met, said first information to the network node. For instance, the network node may provide to target UE 110 at least one "session-type request" triggering condition. In case of a positive evaluation of the at least one triggering condition at target UE 110, target UE 110 may transmit said first information for determining whether a positioning type of target UE 110 is to be session-based or session-less, for example in a location request, like the "session-type request".

The at least one triggering condition may be based on at least one of positioning accuracy requirements, positioning latency requirement, currently achieved positioning accuracy, currently achieved positioning latency, rate of degradation of positioning accuracy and/or latency performance, SL CBR, or geographical area (e.g. zone), etc. For example, target UE 110 may be allowed to send said first information, and possibly the location request, if the SL CBR is above a certain threshold. If the SL CBR is below the threshold, target UE 110 may choose by itself whether or not session-based or session-less positioning is used and hence there is no signaling overhead in terms of the transmission of said first information or the request. On the other hand, if the SL CBR is higher, target UE 110 may request the network node to determine the type of the positioning, so that the network node 132 may make an informed decision considering the system performance.

Example embodiments of the present disclosure therefore enable setting up session-less positioning procedures by the network node, thereby enabling quick as well as low complexity positioning for scenarios with requirements for such. Also, minimum impact on standard specifications, like 3GPP standard specification, may be achieved. Moreover, interference caused by SL positioning may be minimized as for example the SLPP signalling is minimized. That is, signalling needed for SL positioning and session-based positioning is needed only to the minimum necessary extent. SL positioning may also become more attractive as the signalling overhead associated with SL positioning may be reduced. Example embodiments of the present invention therefore enhance positioning in cellular communication networks in general.

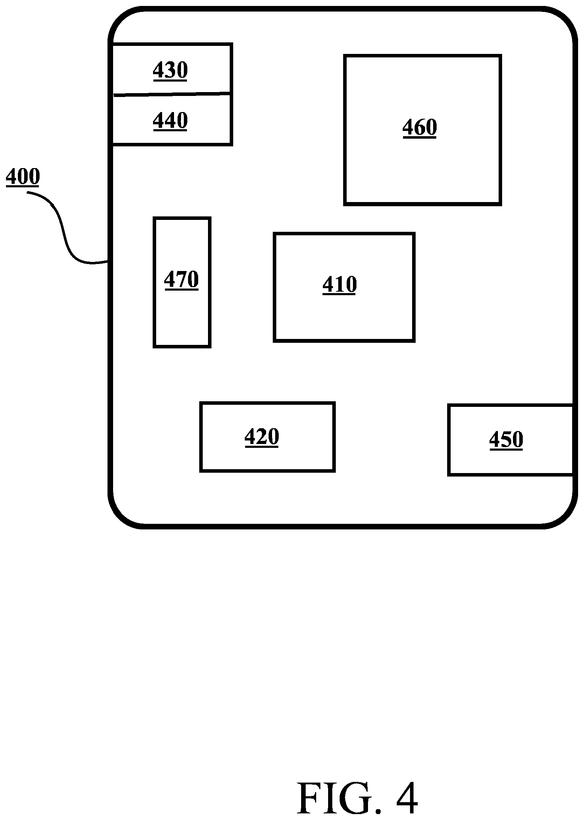

FIGURE 4 illustrates an example apparatus capable of supporting at least some example embodiments. Illustrated is device 400, which may comprise, for example, target UE 110 or wireless network node 120, or a device controlling functioning thereof, possibly when installed therein. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. Processor 410 may comprise at least one Application-Specific Integrated Circuit, ASIC. Processor 410 may comprise at least one Field-Programmable Gate Array, FPGA. Processor 410 may comprise at least one Qualcomm Snapdragon and/or Intel Atom processor. Processor 410 may comprise, for example, a Cortex-A8 processing core manufactured by ARM Holdings or a Steamroller processing core produced by Advanced Micro Devices Corporation. Processor 410 may be means for performing method steps in device 400, such as determining, causing transmitting and causing receiving. Processor 410 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise randomaccess memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with Global System for Mobile communication, GSM, Wideband Code Division Multiple Access, WCDMA, Long Term Evolution, LTE, and/or 5G/NR standards, for example.

Device 400 may comprise a Near-Field Communication, NFC, transceiver 450. NFC transceiver 450 may support at least one NFC technology, such as Bluetooth, Wibree or similar technologies.

Device 400 may comprise User Interface, UI, 460. UI 460 may comprise at least one of a display, a keyboard, a touchscreen, a vibrator arranged to signal to a user by causing device 400 to vibrate, a speaker and a microphone. A user may be able to operate device 400 via UI 460, for example to accept incoming telephone calls, to originate telephone calls or video calls, to browse the Internet, to manage digital files stored in memory 420 or on a cloud accessible via transmitter 430 and receiver 440, or via NFC transceiver 450, and/or to play games.

Device 400 may comprise or be arranged to accept a user identity module 470. User identity module 470 may comprise, for example, a Subscriber Identity Module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. For example, where device 400 comprises a smartphone, it may comprise at least one digital camera. Some devices 400 may comprise a back-facing camera and a front-facing camera, wherein the back-facing camera may be intended for digital photography and the front-facing camera for video telephony. Device 400 may comprise a fingerprint sensor arranged to authenticate, at least in part, a user of device 400. In some embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the embodiments.

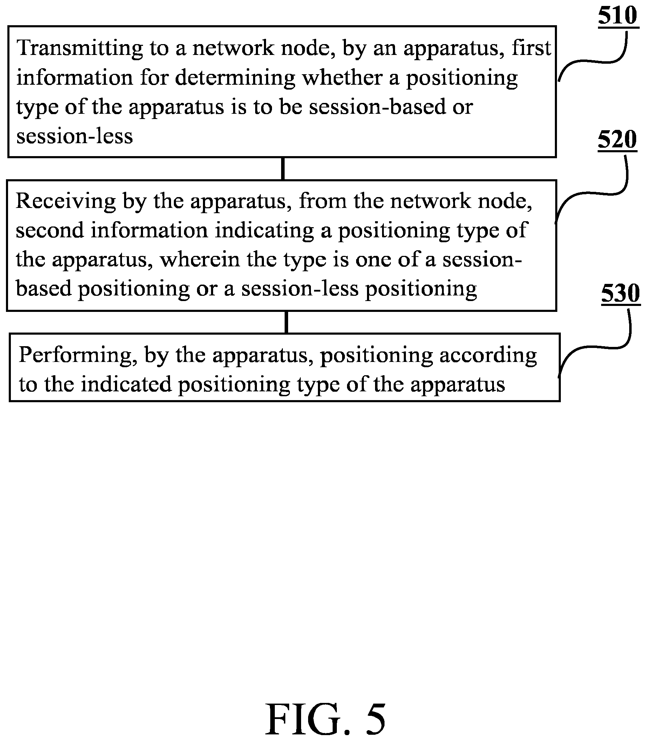

FIGURE 5 is a flow graph of a first method in accordance with at least some example embodiments. The phases of the illustrated first method may be performed by target UE 110, or a device controlling functioning thereof, possibly when installed therein.

The first method may comprise, at step 510, transmitting to a network node, by an apparatus, first information for determining whether a positioning type of the apparatus is to be session-based or session-less. The first method may also comprise, at step 520, receiving by the apparatus from the network node second information indicating a positioning type of the apparatus, wherein the type is one of a session-based positioning or a session-less positioning. Finally, the first method may comprise, at step 530, performing, by the apparatus, positioning according to the indicated positioning type of the apparatus.

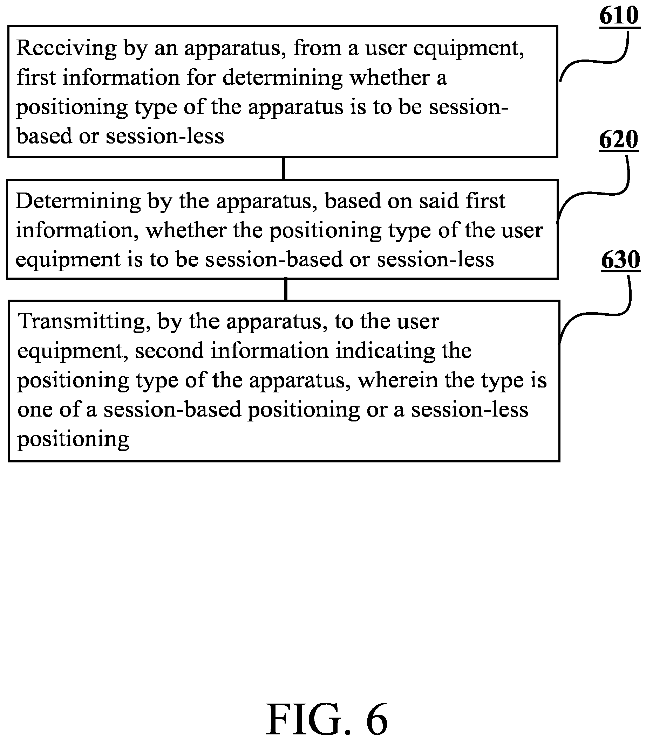

FIGURE 6 is a flow graph of a second method in accordance with at least some example embodiments. The phases of the illustrated second method may be performed by a network node, or a device controlling functioning thereof, possibly when installed therein. The network node may be, comprise or control at least one of a location management function or a user equipment.

The second method may comprise, at step 610, receiving by an apparatus, from a user equipment, first information for determining whether a positioning type of the user equipment is to be session-based or session-less. The second method may also comprise, at step 620, determining by the apparatus, based on said first information, whether the positioning type of the user equipment is to be session-based or session-less. Finally, the second method may comprise, at step 630, transmitting by the apparatus, to the user equipment, second information indicating the positioning type of the apparatus, wherein the type is one of a session-based positioning or a session-less positioning.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, comprising for example target UE 110 or wireless network node 120, may further comprise means for carrying out the example embodiments described above and any combination thereof. The apparatus may be an apparatus of a cellular communication network, such as a 5G network, and comprise means for operating in the cellular communication network.

In an example embodiment, a computer program comprising instructions which, when the program is executed by a computer, cause the computer to carry out a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, comprising for example target UE 110 or wireless network node 120, may further comprise at least one processor, and at least one memory including computer program code, wherein the at least one memory and the computer program code are configured to, with the at least one processor, cause the apparatus at least to perform the example embodiments described above and any combination thereof. The apparatus may be an apparatus of a cellular communication network, such as a 5G network, and configured to operate in the cellular communication network.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the example embodiments in one or more particular applications, it will be apparent to those of ordinary skill in the art that numerous modifications in form, usage and details of implementation may be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

The expression "at least one of A or B" in this document means A, or B, or both A and B.

### INDUSTRIAL APPLICABILITY

At least some example embodiments find industrial application in cellular communication networks wherein positioning is used, such as 5G networks, and possibly in other cellular communication networks in the future as well.

### ACRONYMS LIST

- 3GPP: 3rd Generation Partnership Project
- AGV: Automated Guided Vehicle
- AMF: Access and Mobility management Function
- BS: Base Station
- CBR: Channel Busy Ratio
- CR: Channel usage Ratio
- D2D: Device-to-Device
- DRX: Discontinuous Reception
- GSM: Global System for Mobile communication
- IE: Information Element
- IoT: Internet of Things
- LMF: Location Management Function
- LPP: LTE Positioning Protocol
- LTE: Long-Term Evolution
- M2M: Machine-to-Machine
- MO-LR: Mobile-Originated Location Request
- NFC: Near-Field Communication
- NR: New Radio
- NRPPa: NR Positioning Protocol A
- QoS: Quality of Service
- posSIB: positioning SIB
- PRS: Positioning Reference Signal
- PRU: Positioning Reference Unit
- RAT: Radio Access Technology
- RedCap: Reduced Capability
- RRC: Radio Resource Control
- RSU: Road Side Unit
- SIB: Synchronization Information Block
- SL: Sidelink
- SLPP: SL Positioning Protocol
- UE: User Equipment
- UI: User Interface
- V2X: Vehicle-to-Everything
- WCDMA: Wideband Code Division Multiple Access
- WiMAX: Worldwide Interoperability for Microwave Access
- WLAN: Wireless Local Area Network

### REFERENCE SIGNS LIST

| | |
|---|---|
| 110 | Target UE |
| 115, 125 | Air interfaces |
| 112 | Anchor UE |
| 120, 122 | Wireless network nodes |
| 125, 135 | Wired interfaces |
| 130 | Core network |
| 132 | LMF |
| 210 - 260 | Steps in the signalling graph of FIGURE 2 |
| 310 - 360 | Steps in the signalling graph of FIGURE 3 |
| 400 - 470 | Structure of the apparatus of FIGURE 4 |
| 510 - 530 | Phases of the method in FIGURE 5 |
| 610-630 | Phases of the method in FIGURE 6 |

## Claims

1. An apparatus comprising:
at least one processor; and
at least one memory storing instructions that, when executed by the at least one processor,
cause the apparatus at least to:
- transmit, to a network node, first information for determining whether a positioning type of the apparatus is to be session-based or session-less;
- receive from the network node second information indicating a positioning type of the apparatus, wherein the type is one of a session-based positioning or a session-less positioning; and
- perform positioning according to the indicated positioning type of the apparatus.

2. The apparatus according to claim 1, wherein the stored instructions further cause, when executed by the at least one processor, the apparatus at least to:
- initiate, based on determining that the type is the session-based positioning, positioning with one or more anchor user equipments.

3. The apparatus according to claim 1 or claim 2, wherein the stored instructions further cause, when executed by the at least one processor, the apparatus at least to:
- initiate, based on determining that the type is the session-less positioning, positioning without bidirectional communication or without exchange of acknowledged signalling.

4. The apparatus according to any of the preceding claims, wherein said first information indicates at least one of a positioning application, required positioning accuracy or a priority level of a positioning accuracy.

5. The apparatus according to any of the preceding claims, wherein said first information comprises a set of parameters for assisting in determination on whether the positioning type of the apparatus is to be session-based or session-less.

6. The apparatus according to any of the preceding claims, wherein said first information is transmitted in a positioning request and second information is received in a positioning response.

7. The apparatus according to any of the preceding claims, wherein said first information is transmitted based on receiving a request from the network node.

8. The apparatus according to any of claims 1 to 6, wherein the transmission of said first information is triggered by the apparatus without receiving a request from the network node.

9. The apparatus according to any of the preceding claims, wherein the stored instructions further cause, when executed by the at least one processor, the apparatus at least to:
- receive, from the network node, an indication indicating that the apparatus is allowed to transmit a request for the positioning type of the apparatus; and
- transmit, to the network node, the request at least based on receiving the indication indicating that the apparatus is allowed to transmit the request.

10. The apparatus according to any of the preceding claims, wherein the stored instructions further cause, when executed by the at least one processor, the apparatus at least to:
- receive, from the network node, a triggering condition for determining when to trigger transmission of said first information; and
- transmit, based on determining that the triggering condition is met, said first information to the network node.

11. An apparatus comprising:
at least one processor; and
at least one memory storing instructions that, when executed by the at least one processor,
cause the apparatus at least to:
- receive, from a user equipment, first information for determining whether a positioning type of the user equipment is to be session-based or session-less;
- determine, based on said first information, whether the positioning type of the user equipment is to be session-based or session-less; and
- transmit, to the user equipment, second information indicating the positioning type of the user equipment, wherein the type is one of a session-based positioning or a session-less positioning.

12. A method, comprising:
- transmitting to a network node, by an apparatus, first information for determining whether a positioning type of the apparatus is to be session-based or session-less;
- receiving by the apparatus, from the network node, second information indicating a positioning type of the apparatus, wherein the type is one of a session-based positioning or a session-less positioning; and
- performing, by the apparatus, positioning according to the indicated positioning type of the apparatus.

13. A method, comprising:
- receiving by an apparatus, from a user equipment, first information for determining whether a positioning type of the user equipment is to be session-based or session-less;
- determining by the apparatus, based on said first information, whether the positioning type of the user equipment is to be session-based or session-less; and
- transmitting by the apparatus, to the user equipment, second information indicating the positioning type of the apparatus, wherein the type is one of a session-based positioning or a session-less positioning.

14. A non-transitory computer readable medium having stored thereon a set of computer readable instructions that, when executed by at least one processor, cause an apparatus to at least perform:
- transmitting to a network node first information for determining whether a positioning type of the apparatus is to be session-based or session-less;
- receiving from the network node second information indicating a positioning type of the apparatus, wherein the type is one of a session-based positioning or a session-less positioning; and
- performing positioning according to the indicated positioning type of the apparatus.

15. A non-transitory computer readable medium having stored thereon a set of computer readable instructions that, when executed by at least one processor, cause an apparatus to at least perform:
- receiving from a user equipment, first information for determining whether a positioning type of the user equipment is to be session-based or session-less;
- determining, based on said first information, whether the positioning type of the user equipment is to be session-based or session-less; and
- transmitting, to the user equipment, second information indicating the positioning type of the apparatus, wherein the type is one of a session-based positioning or a session-less positioning.
